(19) Europäisches Patentamt
European Patent Office
Office européen des brevets

(11) **EP 3 585 147 B1**

(12) **FASCICULE DE BREVET EUROPEEN**

(45) Date de publication et mention de la délivrance du brevet:
**12.06.2024 Bulletin 2024/24**

(21) Numéro de dépôt: **18711993.8**

(22) Date de dépôt: **27.02.2018**

(51) Classification Internationale des Brevets (IPC):
**A01G 27/04** *(2006.01)*   **A01G 27/00** *(2006.01)*
**A01G 27/06** *(2006.01)*

(52) Classification Coopérative des Brevets (CPC):
**A01G 27/008; A01G 27/06**

(86) Numéro de dépôt international:
**PCT/FR2018/000039**

(87) Numéro de publication internationale:
**WO 2018/154194 (30.08.2018 Gazette 2018/35)**

(54) **DISPOSITIF D'APPROVISIONNEMENT EN LIQUIDE POUR PLANTE**

FLÜSSIGKEITSZUFÜHRVORRICHTUNG FÜR EINE PFLANZE

LIQUID-SUPPLYING DEVICE FOR A PLANT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.02.2017 FR 1751569**

(43) Date de publication de la demande:
**01.01.2020 Bulletin 2020/01**

(73) Titulaire: **CAPILL'O CONCEPTS**
**83600 Frejus (FR)**

(72) Inventeurs:
• **REUSSARD, Mylène**
**83600 Frejus (FR)**

• **REUSSARD, Jacques**
**83600 Frejus (FR)**

(74) Mandataire: **Bonneau, Florence**
**LOGIPI**
**174 chemin des Gipières**
**06370 Mouans Sartoux (FR)**

(56) Documents cités:
| | |
|---|---|
| EP-A2- 1 232 685 | CN-U- 201 640 064 |
| FR-A1- 2 268 462 | FR-A1- 2 777 418 |
| JP-A- H10 304 783 | KR-A- 20140 143 585 |
| US-A- 4 250 665 | US-A1- 2015 083 246 |

**Description**

DOMAINE TECHNIQUE DE L'INVENTION

La présente invention concerne le domaine de l'approvisionnement des plantes en général, et plus particulièrement le domaine de l'approvisionnement des plantes en pot.

ETAT DE LA TECHNIQUE

L'approvisionnement en eau de plante de préférence en pot, d'intérieur par exemple, est une réelle problématique rencontrée aussi bien par les professionnels au niveau de leurs stocks qu'au niveau des particuliers. Cette problématique est double, d'une part elle concerne le manque d'eau que peuvent ressentir les plantes et qui conduit à la perte de leurs racines, donc à leur mort, et d'autre part elle concerne l'apport excessif d'eau qui conduit également à une dégradation des plantes, voire à leur mort.

Face à cette double problématique, de nombreux systèmes ont été proposés, cela va de la simple bouteille renversée et plantée dans le pot jusqu'à la réalisation de micro-serres autorégulées.

Néanmoins, ces systèmes présentent de nombreux inconvénients, D'une part, ils sont soit très complexes et très coûteux, d'autre part, ils ne parviennent pas à résoudre cette double problématique ou au mieux à n'en solutionner qu'une partie.

Le document EP1232685 décrit un dispositif d'arrosage avec une mèche insérée dans un pot de fleur pour fournir de l'humidité, son autre extrémité étant dans l'eau. Le dispositif d'arrosage a un premier support pour le pot de fleurs en position basse et se trouve dans un pot extérieur. Dans un deuxième support, placé sur le pot de fleurs ou à l'intérieur du pot extérieur, le pot est fixé en position haute. Les deux supports en forme d'anneau ou de disque ont des pieds.

Le document CN201640064 décrit un pot de fleurs magnétique, qui comprend un corps de pot et un aimant. Le fond du corps du pot est pourvu d'un trou dans lequel des fibres ou des bandes de tissu sont insérées, et une boîte de réception d'eau est disposée en dessous du fond du corps en pot.

Le document US 4,250,665 décrit un système de plantation qui contrôle le taux d'évaporation d'un liquide d'humidification et fournit en continu du liquide aux milieux de croissance contenus dans celui-ci. Le système de plantation comprend un moyen pour loger le milieu de croissance et un moyen pour stocker le liquide d'humidification. Un moyen de transfert à l'intérieur du logement et du moyen de stockage transporte le liquide d'humidification du moyen de stockage vers le milieu de croissance.

Enfin, le document JP-H10-304783 décrit un cordon d'alimentation en eau pour fournir de l'eau par capillarité à une installation telle qu'une plante en pot à partir d'une source d'alimentation en eau. La partie du cordon insérée dans le pot de fleur présente au moins une partie annulaire de la forme d'une boucle. Le dispositif comprend également une partie tubulaire entourant une partie du cordon. Cependant, rien n'est prévu pour que de l'air passe dans la partie annulaire et dans le pot et la problématique de l'excès d'eau et de ses conséquences telles que condensation et humidité en excès au dessous du pot et pourrissement du cordon ne peuvent être évitées.

Le problème revient à trouver un dispositif d'approvisionnement en eau d'une plante qui renouvelle l'air et l'eau au niveau du substrat de la plante, de façon équilibrée. La présente invention vise à résoudre cette double problématique et ses conséquences exposées ci-dessus.

RESUME DE L'INVENTION

La présente invention concerne un dispositif d'approvisionnement configuré pour approvisionner en liquide au moins une plante contenue dans un pot comprenant un substrat, le dispositif d'approvisionnement comprenant au moins :

  ◦ Un conducteur hydraulique configuré pour acheminer le liquide par capillarité et comprenant au moins une première extrémité et au moins une deuxième extrémité ;
  ◦ Un tube, de préférence cylindrique, comprenant au moins une première sortie et au moins une deuxième sortie, la deuxième sortie étant destinée à être en contact avec le substrat via le fond du pot, le tube logeant une partie au moins du conducteur hydraulique ;

Le dispositif d'approvisionnement étant caractérisé en ce que :

  ▪ Le conducteur hydraulique comprend, de préférence en son milieu, au moins une boucle comprenant un coude et au moins une première et une deuxième portions du conducteur hydraulique s'étendant respectivement de part et d'autre du coude, de préférence ladite au moins une boucle étant destinée à être placée au moins en partie en contact avec le substrat ;
  ▪ La boucle est disposée à l'extérieur du tube et au moins une portion de conducteur hydraulique sort par la deuxième sortie du tube ;
  ▪ La première extrémité et la deuxième extrémité du conducteur hydraulique sont disposées à l'extérieur du tube au niveau de la première sortie du tube ;
  ▪ Au moins une extrémité du conducteur hydraulique parmi la première extrémité et la deuxième extrémité est destinée à être en contact avec une source de liquide, de préférence contenue dans un réservoir de liquide ;

▪ Le tube comprend au moins une ouverture configurée pour permettre une circulation d'air entre l'intérieur et l'extérieur du tube, de préférence au moins une ouverture est portée par une paroi latérale du tube et est disposée entre la première sortie et la deuxième sortie du tube, de préférence au moins une ouverture s'étend sous la forme d'une fente longitudinale depuis la deuxième sortie du tube et en direction de la première sortie.

La présente invention permet ainsi d'apporter la quantité de liquide nécessaire au développement de la plante sans excès que cela soit en sous ou en surabondance et permet également le renouvellement de l'air dans le substrat.

En effet, le principe de capillarité est ici utilisé pour que le substrat puise le liquide nécessaire à la plante via le conducteur hydraulique configuré spécialement pour répondre au besoin de la plante.

La présente invention bénéficie également d'un degré de liberté dans le fait de disposer une ou deux extrémités du conducteur hydraulique dans le réservoir de liquide. Cela permet par exemple de piloter de manière simple et efficace l'apport en liquide en fonction de divers paramètres extérieurs comme la température et la luminosité de la pièce. Cela permet également d'attribuer à une extrémité du conducteur hydraulique un certain type de liquide et à l'autre extrémité du conducteur hydraulique un autre type de liquide.

La présente invention propose ainsi une solution simple et efficace face à la double problématique de l'approvisionnement en liquide des plantes.

Le conducteur hydraulique est avantageusement conçu pour tenir compte du type de substrat et des dimensions du pot afin d'apporter ni trop, ni trop peu de liquide à la plante.

L'apport en eau est ainsi continu permettant à la plante de ne pas subir de stress, ni de variation brusque de son hydratation. L'apport d'eau par capillarité permet de remplir la micro porosité du substrat, laissant dans la macro porosité l'air indispensable à la vie des racines.

De plus, grâce au dispositif selon l'invention, la plante reçoit un juste apport de liquide et son substrat est aéré ce qui permet de garder la plante dans son pot d'origine.

La présente invention concerne aussi un ensemble comprenant au moins un pot, une plante et un substrat contenus dans le pot, au moins un cache-pot et au moins un dispositif d'approvisionnement selon la présente invention.

## BREVE DESCRIPTION DES FIGURES

Les buts, objets, ainsi que les caractéristiques et avantages de l'invention ressortiront mieux de la description détaillée de modes de réalisation de cette dernière qui sont illustrés par les dessins d'accompagnement suivants dans lesquels :

-    Les figures 1a à 1d illustrent deux modes de réalisation selon la présente invention d'un dispositif d'approvisionnement en liquide pour approvisionner au moins une plante.
-    La figure 2 illustre un support selon un mode de réalisation de la présente invention configuré pour supporter en partie au moins un dispositif d'approvisionnement en liquide selon la présente invention.
-    La figure 3 illustre un mode de réalisation selon la présente invention de disposition du support selon la figure 2.
-    Les figures 4a et 4b illustrent chacune une vue en coupe d'un pot disposé sur un support placé dans un cache-pot selon un mode de réalisation de la présente invention.
-    Les figures 5a et 5b illustrent une jardinière selon un mode de réalisation de la présente invention.
-    Les figures 6a à 6d illustrent un ensemble composé d'au moins un cache-pot, un pot, un réservoir de liquide et comprenant un dispositif d'approvisionnement en liquide selon la présente invention. Les figures 6c et 6d représentent l'ensemble fixé à une surface métallique.
-    Les figures 7a à 7c illustrent, selon deux modes de réalisation de la présente invention, une plateforme de soutien pour au moins un pot.
-    La figure 8 illustre un détecteur de niveau de liquide selon un mode de réalisation de la présente invention.

Les dessins joints sont donnés à titre d'exemples et ne sont pas limitatifs de l'invention. Ces dessins sont des représentations schématiques et ne sont pas nécessairement à l'échelle de l'application pratique.

## DESCRIPTION DETAILLEE DE L'INVENTION

Dans la description qui suit, des numéros de référence similaires seront utilisés pour décrire des concepts similaires à travers des modes de réalisation différents de l'invention.

Sauf indication spécifique du contraire, des caractéristiques techniques décrites en détail pour un mode de réalisation donné peuvent être combinés aux caractéristiques techniques décrites dans le contexte d'autres modes de réalisation décrits à titre exemplaire et non limitatif.

Dans le cadre de la présente invention, les termes « un » ou « une » signifient « au moins » par défaut, à moins qu'il n'en soit disposé explicitement autrement.

Dans le cadre de la présente invention, un « conducteur hydraulique » est un élément présentant la capacité de conduire un liquide d'un point à un autre, par exemple par capillarité. Dans le cadre de l'invention le conducteur hydraulique peut par exemple être une mèche, une corde, un fil ou encore un lacet, ou tout autre type d'élément apte à conduire un liquide par capillarité.

Dans la description qui suit, le terme « boucle » a pour définition une portion d'un conducteur hydraulique formée par au moins un coude et deux portions du conducteur hydraulique s'étendant de part et d'autre du coude. La boucle ainsi formée n'est pas nécessairement fermée. Elle peut être ouverte ou simplement fermée par la mise en contact au moins partielle desdits deux portions du conducteur hydraulique. Les deux portions du conducteur hydraulique s'étendant de part et d'autre du coude peuvent être au contact l'une de l'autre, par exemple à l'intérieur du tube.

Le coude du conducteur hydraulique, au moins une des deux portions du conducteur hydraulique s'étendant de part et d'autre du coude et le tube définissent ensemble une boucle fermée, c'est à dire un pourtour fermé.

La conductivité hydraulique K est une grandeur qui exprime l'aptitude d'un matériau à laisser passer un fluide sous l'effet d'un gradient de pression. C'est une grandeur dépendant à la fois des propriétés du matériau où l'écoulement a lieu (composition chimique, densité des fibres, diamètre des fibres, ...), des propriétés du fluide qui s'écoule (viscosité, densité) et du degré de saturation du matériau. La conductivité hydraulique, qui a la dimension d'une vitesse, est généralement exprimée en mètres par seconde (m/s).

La loi de Darcy exprime le débit filtrant Q au travers d'un matériau en fonction de sa conductivité hydraulique K et du gradient de pression selon l'équation suivante :

$$Q = K \, A \, \frac{\Delta H}{L}$$

Avec :

Q : le débit volumique filtrant ($m^3$/s).
K : la conductivité hydraulique du matériau considéré (m/s).
A : la surface de la section du matériau considéré ($m^2$)
$\Delta H/L$ : Le gradient hydraulique (i = $\Delta H/L$), où $\Delta H$ est la différence des hauteurs piézométriques en amont et en aval du matériau, L est la longueur du matériau considéré.

La conductivité hydraulique K peut s'exprimer en fonction des propriétés intrinsèques du matériau poreux et de celles du fluide :

$$K = \frac{k \rho g}{\mu}$$

Avec :

k : la perméabilité intrinsèque du milieu ($m^2$),
$\rho$ : la masse volumique du fluide (kg/$m^3$),

g : l'accélération de la pesanteur (m/$s^2$),
$\mu$ : la viscosité dynamique du fluide.

La présente invention trouve pour domaine préférentiel d'application le domaine de l'approvisionnement en liquide, en eau par exemple, d'une plante de préférence contenue dans un pot.

La plante en question comprend des racines qui, de préférence, sont entourées par un substrat. Le substrat ayant pour rôle l'approvisionnement de la plante, celui-ci se doit de pourvoir au besoin en liquide de la plante. Pour cela, le substrat est en général régulièrement hydraté. Le substrat doit également permettre l'échange d'air entre l'atmosphère et les racines pour subvenir à leur besoin en oxygène.

Toutefois, comme nous l'avons vu dans l'art antérieur, l'hydratation est rarement optimale conduisant à une sous-abondance ou une surabondance de liquide et à la mort de la plante, de plus l'hydratation n'est pas associée à l'aération.

Avantageusement, le liquide est issu d'une source et peut être de l'eau simple ou de l'eau comprenant un additif ou tout autre liquide comprenant des éléments pour plante. De manière avantageuse, la source de liquide peut être dynamique ou statique. Dans le cas d'une source dite « dynamique », la source de liquide peut être un courant de liquide, une rivière, etc...

Dans le cas d'une source de liquide dite « statique », cette source peut être un réservoir.

La mise en oeuvre de la présente invention a montré de manière surprenante que l'utilisation d'un conducteur hydraulique sous la forme d'une mèche par exemple repliée sur elle-même introduite dans un tube et formant une boucle permet d'apporter à la plante une quantité de liquide et d'air suffisants et de préférence continue.

Cet apport en liquide est réalisé de sorte que l'une des deux extrémités du conducteur hydraulique soit en contact avec un liquide et qu'une portion du conducteur hydraulique, de préférence la boucle soit en contact avec le substrat.

Comme il sera présenté ci-après, la mise au point de la présente invention a nécessité une démarche intellectuelle à contre-courant des enseignements techniques de l'horticulture. A l'heure de l'automatisation et des systèmes informatiques de suivi de l'hydrométrie et autres paramètres physico-chimique des substrats des plantes, la présente invention se propose d'innover en simplifiant, fiabilisant et solutionnant les problématiques d'approvisionnement des besoins essentiels des plantes en pot, problématiques partiellement résolues par l'art antérieur.

Nous allons à présent présenter la présente invention au travers de diverses figures représentant l'esprit de l'invention et servant d'exemple non limitatif de mise en application et de réalisation de celle-ci.

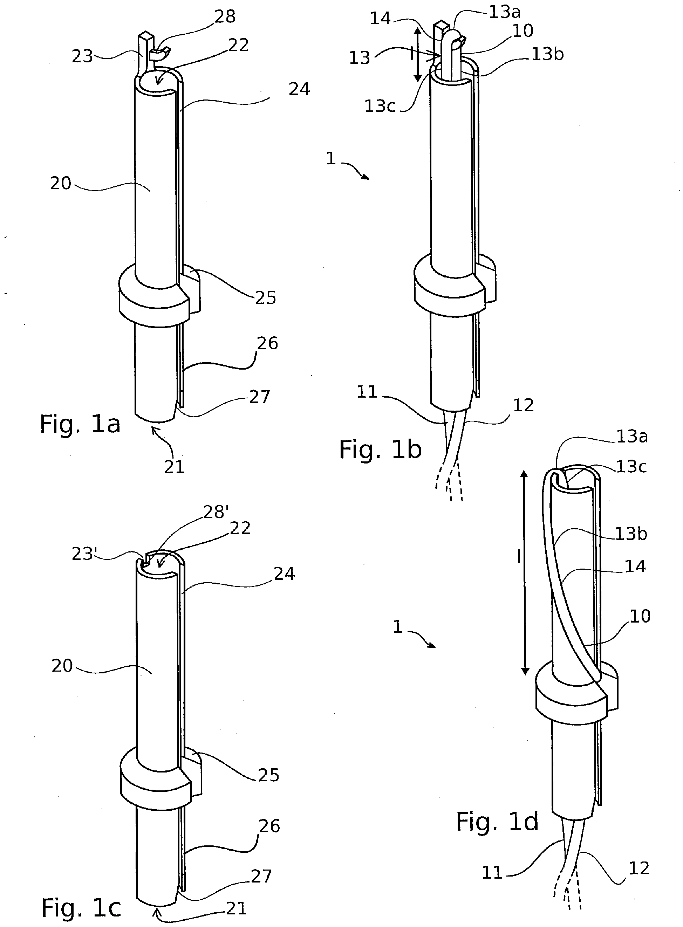

Les figures 1a, 1b, 1c et 1d illustrent deux modes de réalisation de la présente invention. Le premier mode de réalisation est illustré sur les figures 1a et 1b et le second mode de réalisation est illustré par les figures 1c et 1d. Chacun de ces modes de réalisation a été conçu suivant le même principe inventif. En effet, la présente invention tire avantage du phénomène de capillarité et d'une mise en oeuvre précise pour approvisionner une plante en liquide de manière suffisante et continue. On entend par « continu » ou « constant » le fait que tant que le réservoir de liquide n'est pas vide, un flux de liquide existe entre le réservoir de liquide et le substrat de la plante, et donc la plante elle-même. La présente invention permet également le renouvellement d'air au niveau du substrat.

Les dispositifs d'approvisionnement 1 illustrés sur les figures 1b et 1d, sont configurés pour être introduits au niveau du fond du pot 50 de la plante 2 de sorte à être en contact au moins partiel avec le substrat 51 de la plante 2.

Le dispositif d'approvisionnement 1 comprend un conducteur hydraulique 10 sous la forme avantageuse d'une mèche souple par exemple, et un tube 20. Les deux figures 1a et 1c représentent le tube 20 seul donc sans le conducteur hydraulique 10. Le tube 20 comprend un corps principal de forme cylindrique mais peut également être légèrement conique pour faciliter son insertion. Le tube 20 comprend un matériau pris parmi au moins les matériaux suivants : polymère, bois, matériau composite.

De préférence, la dimension d'extension principale de longueur L du tube 20 dans le substrat 51 est inférieur à la moitié de l'épaisseur e du substrat, l'épaisseur e étant mesurée selon un axe parallèle à la dimension d'extension principale du tube.

De manière avantageuse, le conducteur hydraulique 10 présente une conductivité hydraulique K adaptée au type de plante 2 pour laquelle il est utilisé et/ou au type de liquide 52 utilisé. De préférence, le conducteur hydraulique est fait d'un matériau synthétique.

Le conducteur hydraulique 10 est configuré pour apporter par capillarité un flux de liquide 52 constant au substrat 51, et donc à la plante 2. En effet, le substrat 51 assure la continuité de ce flux de liquide 52 depuis le conducteur hydraulique 10 vers les racines de la plante 2.

Avantageusement, le substrat 51 conduit le flux de liquide 52 via une saturation de ses fibres, de préférence de ses microporosités, sans jamais combler ou remplir de cavités dans le substrat 51, c'est-à-dire sans jamais remplir les macroporosités du substrat 51. Dans le cas où le substrat 51 comprend des poches d'air, celles-ci ne sont ainsi jamais remplies de liquide 52. Cela permet de ne pas asphyxier les racines de la plante 2. Selon un mode de réalisation préféré, le conducteur hydraulique 10 peut être une mèche comprenant une pluralité de fibres. Ledit conducteur hydraulique 10 est configuré pour permettre la circulation du liquide 52 par capillarité depuis un réservoir 61 de liquide 52 vers le substrat 51 de la plante 2.

La figure 1a illustre également un premier mode de réalisation du tube 20. Les deux extrémités du tube 20 sont ouvertes de façon à former une première sortie 21 et une deuxième sortie 22 par lesquelles le conducteur hydraulique 10 est disposé. La première et la deuxième sorties 21 et 22 du tube 20 sont décalées selon une direction selon laquelle le tube s'étend principalement.

Selon un mode de réalisation préféré, le tube 20 comprend une butée 25 configurée pour venir au contact du fond du pot ou du support du pot de sorte à limiter la pénétration du tube 20 dans le pot 50 et donc dans le substrat 51.

Le tube 20 comprend sur sa paroi latérale au moins une première ouverture de préférence sous la forme d'une fente longitudinale 24 traversant toute l'épaisseur de la paroi du tube 20, partant depuis la seconde sortie 22 et s'étendant vers la butée 25 et de préférence jusqu'à la butée. Cette fente 24 est configurée pour former un passage permettant la circulation de l'air depuis le tube 20 vers le conducteur hydraulique 10 et vers le substrat 51 et inversement. L'air extérieur entrant par la première sortie 21 du tube parvient à différentes hauteurs dans l'épaisseur du substrat 51 par l'ouverture 24 grâce à sa forme en et sa longueur. Le tube 20 comprend également sur sa paroi latérale une seconde ouverture sous la forme d'une fente longitudinale 26 partant depuis la première sortie 21 et s'étendant jusqu'à la butée 25. Selon un mode de réalisation préféré de l'invention, les fentes 24 et 26 sont alignées et se rejoignent de sorte à ne former qu'une seule ouverture longitudinale sous forme d'une fente sur toute la longueur du tube 20 telle que représenté sur les figures 1a à 1d.

La fente 24 permet une circulation d'air au niveau du conducteur hydraulique, du substrat et des racines de sorte à éviter que les racines de la plante ne soient asphyxiées car l'air et en particulier l'oxygène dans le substrat est indispensable pour la vie des racines.

La fente 26, située en dehors du substrat 51 lorsque le dispositif d'approvisionnement 1 est en place dans le pot 50, vient s'ajouter à la sortie 21 du tube pour permettre à l'air extérieur d'entrer dans le tube. L'air entrant par la sortie 21 et par la fente 26 parvient au substrat 51 par la fente 24 et par la sortie 22. De façon générale les deux ouvertures 24 et 26 permettent d'augmenter la circulation d'air entre l'extérieur et l'intérieur du tube et les échanges d'air entre l'extérieur et l'intérieur du substrat 51. De plus cela évite la formation de moisissure et/ou de pourriture au niveau du conducteur hydraulique. Ainsi, le tube 20 sert de moyen pour augmenter les échanges d'air entre le substrat et l'extérieur et entre le conducteur hydraulique et l'extérieur.

Lorsque les deux fentes 24 et 26 ne forment qu'une seule ouverture longitudinale, le conducteur hydraulique 10 est introduit dans le tube par cette ouverture. La largeur des fentes 24 et 26 est dimensionnée de façon à permettre son passage. Les fentes 24 et 26 peuvent avoir la même largeur sur toute la longueur du tube. De préférence, la plus petite largeur des fentes est égale au diamètre du conducteur hydraulique et de préférence est légèrement inférieure. Les fentes 24 et 26 formant qu'une seule ouverture longitudinale facilitent l'introduction du conducteur hydraulique dans le tube.

Comme illustré sur les figures 1b et 1c, le conducteur hydraulique 10 est replié sur lui-même de préférence au niveau du milieu de sa longueur de façon à former un coude 13a et deux brins s'étendant de part et d'autre du coude 13a jusqu'à leurs extrémités respectives 11 et 12. Le conducteur hydraulique est introduit dans le tube 20 de façon à ce que le coude 13a sorte par l'ouverture 22 du tube, que les deux brins soient positionnés dans le tube de préférence droits et tendus et que les deux extrémités 11 et 12 du conducteur hydraulique sortent par l'ouverture 21 du tube. La partie du conducteur hydraulique située au niveau du coude 13a et située à l'extérieur du tube forme une boucle 13.

Une fois introduit dans le tube 20, le conducteur hydraulique est bloqué de préférence au niveau de la deuxième sortie 22 du tube 20, via un élément du tube 20 tel un organe de maintien 23 et 23' présentant une surface de butée 28 et 28' sur lequel le coude 13a du conducteur hydraulique vient s'appuyer. Ainsi, le blocage du conducteur hydraulique réalisé au niveau du coude 13a, assure le maintien de la boucle 13 en place relativement au tube 20 lors de sa manipulation et surtout lors de l'insertion du dispositif d'approvisionnement 1 dans le substrat 51 de la plante 2 via le fond du pot 50 par exemple. De façon avantageuse, l'organe de maintien 23 et 23' limite le déplacement du coude 13a en direction de l'intérieur du tube.

Dans cette configuration, le tube 20 sert de guide et de maintien au conducteur hydraulique 10, il assure ainsi son positionnement et son maintien relativement au réservoir 61 de liquide 52 et au substrat 51.

L'organe de maintien 23 et 23' permet également de définir précisément la dimension de la boucle 13 et donc la surface d'échange 14 du conducteur hydraulique avec le substrat.

De manière avantageuse, la boucle 13 est formée à partir du coude 13a et respectivement d'au moins une première 13b et d'une deuxième 13c portions de conducteur hydraulique 10 s'étendant de préférence respectivement de part et d'autre de l'organe de maintien 23 et 23'. La boucle 13 présente une surface interne et une surface externe, la surface externe étant de préférence destinée à être au moins en partie au contact du substrat 51.

De préférence, la surface de butée 28 et 28' respectivement de l'organe de maintien 23 et 23' est en regard, voire au contact d'une partie au moins de la surface interne du conducteur hydraulique 10 au niveau de la boucle 13, de préférence au niveau du coude 13a.

Avantageusement, le tube 20 comprend ainsi au moins un point de maintien de la boucle 13 au niveau de la deuxième sortie 22, ce point de maintien pouvant être la surface de butée 28 de l'organe de maintien 23 comme représenté en figure 1a située à l'extérieur du corps principal du tube 20 ou bien la surface de butée 28' de l'organe de maintien 23' comme représenté sur la figure 1c situé sur la paroi latérale du corps principal du tube 20 au niveau de la deuxième sortie 22. De préférence, l'organe de maintien 23 et 23' et la surface de butée 28 et 28' sont situés de façon à maintenir la partie du conducteur hydraulique 10 positionnée à l'intérieur du tube le plus près possible, voire contre la partie de la surface interne du tube 20 diamétralement opposé à la fente 26. Ainsi, la surface de butée 28 présente une légère pente dont le point bas est situé sur un axe de la surface interne du tube situé diamétralement opposé à l'axe de la fente 24. De même l'organe de maintien 23' sous forme d'une fente est situé sur la paroi du tube 20 de façon à ce que son axe longitudinal soit diamétralement opposé à celui de la fente 26. Cela permet d'éviter que la surface de la partie de conducteur hydraulique 10 située à l'intérieur du tube 20 soit en contact avec le substrat 51.

Le conducteur hydraulique 10 traverse avantageusement le tube 20 sans contrainte afin de ne pas modifier sa conductivité hydraulique K. De manière avantageuse et afin de permettre le phénomène de capillarité, le tube 20 présente un diamètre configuré pour coopérer avec le diamètre du conducteur hydraulique 10.

Le diamètre du tube 20 est dimensionné de façon à ce que les deux brins du conducteur hydraulique peuvent coulisser dans le tube sans contrainte et ce, même lorsque le conducteur hydraulique est gorgé de liquide. De préférence, le diamètre du tube est dimensionné de façon à ce que même lorsque le conducteur hydraulique est logé dans le tube et gorgé de liquide, il existe un passage dans le tube non occupé par le conducteur et apte à laisser circuler de l'air entre les première 21 et deuxième 22 sorties du tube 20.

Selon un mode de réalisation, le diamètre intérieur du tube 20 est au moins égal à deux fois le diamètre du conducteur hydraulique 10. De façon générale, le rapport entre le diamètre intérieur du tube et le diamètre du conducteur hydraulique est compris entre 1.8 et 3.5, de préférence entre 2.1 et 2.3 et avantageusement entre 2.2 et 2.3.

Dans la configuration des figures 1a, 1b, 1c et 1d, les deux extrémités 11 et 12 du conducteur hydraulique 10 sont laissées libres afin que l'une ou bien les deux soient en contact avec le liquide 52 en fonction des besoins de la plante 2.

En effet, dans un cas il est possible de ne disposer qu'une seule des extrémités 11 ou 12 du conducteur hydraulique 10 en contact avec le liquide 52, et dans un autre cas, cas où la plante nécessite un plus grand apport en liquide 52, il est possible de disposer les deux extrémités 11 et 12 du conducteur hydraulique 10 en contact avec le liquide 52.

Selon un autre mode de réalisation, la première extrémité 11 peut être en contact avec un premier liquide et la deuxième extrémité 12 avec un deuxième liquide.

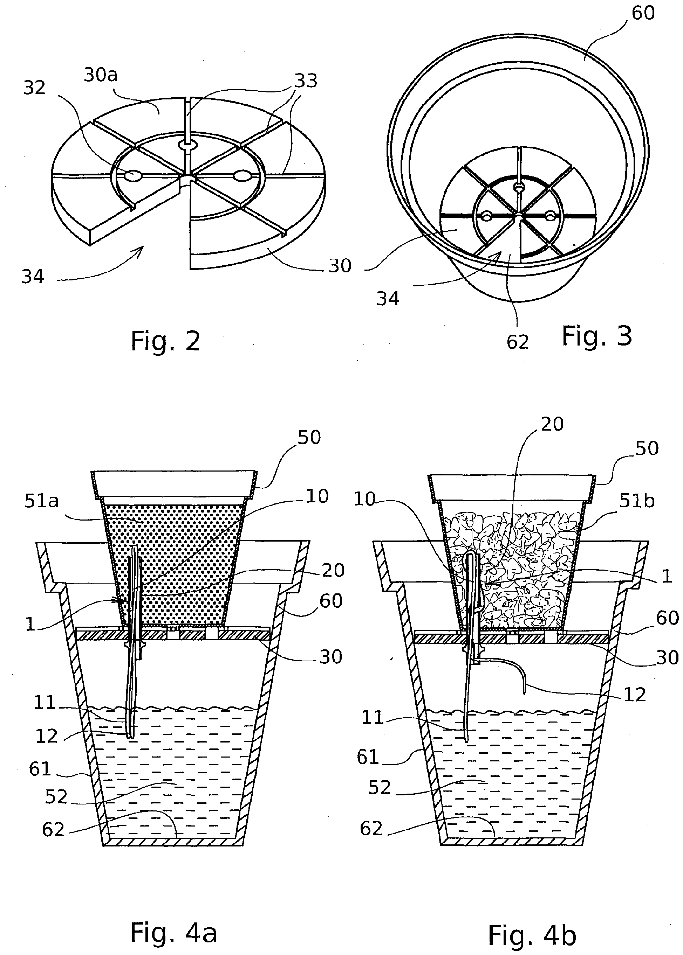

De manière avantageuse, et dans le cas où l'une parmi les deux extrémités 11 et 12 n'est pas en contact avec le liquide 52, l'ouverture 26 est configurée pour permettre le passage et le maintien de ladite extrémité qui n'est pas en contact avec le liquide 52. A cette fin, l'ouverture 26 présente une largeur inférieure au diamètre du conducteur hydraulique 10 de sorte à permettre son passage et son maintien par un phénomène de compression de l'ouverture 26 sur le conducteur hydraulique 10, de préférence sur ladite extrémité qui n'est pas en contact avec le liquide 52. Cette configuration est représentée sur la figure 4b.

Il est à noter que dans la configuration des figures 1a et 1b, le conducteur hydraulique 10 présente une boucle 13 dont la surface externe en contact avec le substrat va constituer la surface d'échange 14 entre le conducteur hydraulique 10 et le substrat 51. Cette surface d'échange 14 est un des paramètres permettant la bonne mise en oeuvre de la présente invention. Ce paramètre peut être déterminé sur la base du type de plante 2, de la dimension du pot 50 et du diamètre du conducteur hydraulique 10, de sa nature mais également de la nature du substrat 51. L'ensemble de ces paramètres est pris en considération lors de la mise en oeuvre de la présente invention. Des exemples de valeurs numériques et de dimensions des différents éléments constitutifs de l'invention sont présentés à la fin de la description. Les paramètres du conducteur hydraulique sont ainsi optimisés aux besoins de chaque plante.

La présente invention assure une surface d'échange optimisée entre le conducteur hydraulique et le substrat de sorte à réguler l'apport en liquide.

La configuration selon les figures 1c et 1d est un deuxième mode de réalisation dans lequel l'organe de maintien 23' est formé par une fente sur la paroi latérale du tube 20 et située au niveau de sa deuxième sortie 22. Dans ce mode de réalisation, la boucle 13 formé par le conducteur hydraulique 10 comprend le coude 13a et la portion 13b de conducteur hydraulique. Alors que dans le premier mode de réalisation illustré sur les figures 1a et 1c les deux portions 13b et 13c de la boucle 13 sortent du tube par la deuxième sortie 22, dans le second mode illustré par les figure 1c et 1d, au moins une portion de la boucle 13, la portion 13b, sort du tube par la fente 24 de préférence au niveau de la butée. La surface d'échange 14 obtenue entre la boucle 13 et le substrat 51 est plus importante que précédemment pour un diamètre du conducteur hydraulique 10 équivalent. Cette situation peut convenir pour certaines plantes 2 et substrats 51 nécessitant une surface d'échange 14 plus importante pour apporter la quantité de liquide 52 suffisante.

Un exemple de cette situation est illustré également par la figure 4b que nous décrirons ci-après.

Ce mode de réalisation est particulièrement adapté aux orchidées par exemple qui sont généralement disposées dans un substrat composé de copeaux de bois ou encore d'écorces 51b. Dans ce substrat 51b, la surface d'échange 14 entre la boucle 13 du conducteur hydraulique 10 et les écorces 51b est relativement faible si l'on considère le mode de réalisation des figures 1a et 1b. Le mode de réalisation de la figure 1c convient parfaitement à ce type de plante 2 et de substrat 51b compte tenu du fait que la surface d'échange 14 est augmentée.

Cet exemple d'adaptation de la surface d'échange 14 est une illustration de l'adaptabilité de la présente invention à tout type de plante.

Nous allons à présent décrire, selon un mode de réalisation, un support 30 pour le dispositif d'approvisionnement 1 précédemment décrit sur la base de l'exemple présenté en figure 2.

La figure 2 illustre un support 30 pour le dispositif d'approvisionnement 1 configuré pour être disposé à l'arrière du fond du pot 50 de la plante 2 de sorte à maintenir le dispositif d'approvisionnement 1 en position relativement au pot 50 et pour supporter le pot 50 lui-même. Le support 30 est avantageusement disposé sous le fond du pot 50.

A titre de simple exemple non limitatif, le support 30 illustré en figure 2 présente une forme de disque. De manière avantageuse, la forme du support 30 peut être quelconque, de manière préférée la forme du support 30 est configurée pour s'adapter à la forme du pot 50 qui est généralement cylindrique.

Selon un mode de réalisation, le support 30 présente une surface d'appui 30a s'étendant dans un plan de préférence horizontal. Cette surface d'appui 30a est traversé par le tube 20 dans une position sensiblement verticale, c'est-à-dire dans une position inclinée d'au plus 20% par rapport à la verticale, et sert également à supporter le pot 50.

Lors de la mise au point de la présente invention, il a été observé la formation de moisissures puis le pourrissement du conducteur hydraulique 10, ou des racines de la plante 2 ou encore du substrat 51. Ces phénomènes ont été étudiés et leurs origines identifiées, il s'agissait d'un manque de renouvellement d'air au niveau du conducteur hydraulique 10. Pour solutionner cette problématique survenue lors du développement de la présente invention, le support 30 a été conçu de sorte à permettre un renouvellement de l'air lors du fonctionnement de la présente invention. La ventilation dessous le pot 50 et la ventilation des substrats est ainsi possible avec la présente invention pour maintenir l'équilibre air/liquide.

Ainsi, de manière préférée, le support 30 comprend des passages de circulation d'air 33 réalisés aux moyens de rainures par exemple au niveau de la surface d'appui 30a.

De manière avantageuse, le support 30 comprend un accès 34, sous la forme par exemple d'une section de disque absente, permettant la circulation de l'air, et de préférence le remplissage du réservoir 61 de liquide 52 lorsque le réservoir 61 est situé sous le support 30.

De manière avantageuse, la surface d'appui 30a peut comprendre au moins un trou d'aération 32 afin de permettre la circulation de l'air mais également apte à recevoir le tube 20 du dispositif d'approvisionnement 1 de sorte à ce que le support 30 soit traversé par le tube 20, de préférence par le conducteur hydraulique 10. La surface d'appui 30a peut également comprendre un moyen pour maintenir ainsi le tube 20 en position relativement au pot 50 c'est-à-dire à le maintenir inséré dans le substrat 51. L'accès 34 peut également servir de trou pour le passage du tube 20 du dispositif d'approvisionnement. Le trou 34 est dimensionné pour le passage du le tube et représente également une arrivée d'air sous le support 30 afin de permettre une circulation d'air au niveau du dispositif d'approvisionnement 1.

La figure 3 représente un mode de réalisation de la présente invention dans lequel le support 30 est disposé dans un cache-pot 60. Le cache-pot 60 présente une forme cylindrique et un diamètre intérieur rétrécissant depuis le haut du cache-pot 60 vers le bas du cache-pot 60. Dans cette configuration, le support 30 peut être disposé directement dans le cache-pot 60 en présence ou non d'un déboitement sur la surface intérieure du cache-pot 60. Avantageusement, selon ce mode de réalisation, le fond 62 du cache-pot 60 peut définir avec le support 30 un réservoir de liquide.

Les figures 4a et 4b illustrent la mise en application de la présente invention au travers de deux vues en coupe d'un pot 50 avec un substrat 51a ou 51b disposé sur un support 30 inséré dans un cache-pot 60 tel que représenté sur la figure 3.

La figure 4a se distingue de la figure 4b par le type de substrat 51. En effet, dans la figure 4a il s'agit d'un substrat 51 dit dense, c'est-à-dire de la terre 51a par exemple, alors que dans la figure 4b, le substrat 51 se trouve être des copeaux de bois, voire des morceaux d'écorces 51b.

Comme indiqué précédemment, en fonction du type de substrat 51, le dispositif d'approvisionnement 1 peut être différent.

Ainsi, en accords avec ce principe, le dispositif d'approvisionnement 1 de la figure 4a est similaire au premier mode de réalisation présenté en figures 1a et 1b et le dispositif d'approvisionnement 1 de la figure 4b est similaire au second mode de réalisation présenté en figures 1c et 1d.

Sur les figures 4a et 4b, le pot 50 est disposé sur un support 30. Ces figures permettent ainsi de visualiser le positionnement du dispositif d'approvisionnement 1 dans le pot 50. La butée 25 du tube 20 vient au contact du fond du support 30 ou bien vient au contact du fond du pot 50.

Selon un mode de réalisation préféré et illustré au travers des figures 4a et 4b, le dispositif d'approvisionnement 1 est disposé de manière décentrée relativement au substrat. On entend par « centre du substrat » tous points contenus par un axe d'extension principal du substrat 51 selon une dimension en épaisseur de préférence sensiblement colinéaire à la dimension en hauteur du pot 50, cet axe d'extension principal passant par le centre géométrique de la base du pot 50. Selon ce mode de réalisation, la boucle 13 est positionnée de préférence de manière décentrée relativement au centre du substrat 51 et de manière à être de préférence orientée vers le centre du substrat 51 afin de dispenser selon cette direction privilégiée le liquide 52. Le fait de décentrer le dispositif d'approvisionnement par rapport au substrat permet de limiter les excès d'eau, l'apport d'eau étant permanent la diffusion est ainsi moins rapide.

Ce mode de réalisation préféré permet d'améliorer le contrôle de l'apport en liquide 52 relativement à la plante 2. En effet selon ce mode de réalisation, l'apport en liquide 52 est contrôlé d'une part par le flux de liquide 52 au travers du dispositif d'approvisionnement 1 et d'autre part par le flux de liquide 52 au travers du substrat 51. Ainsi cela ce mode de réalisation, la synergie entre le dispositif d'approvisionnement 1 et le substrat 51 est amplifiée permettant un meilleur contrôle de l'approvisionnement de la plante 2 en liquide 52.

Selon un autre mode de réalisation non illustré, le dispositif d'approvisionnement 1 est disposé au centre du pot 50 de sorte à ce que le substrat 51 soit approvisionné en liquide 52 de manière homogène.

Sur la figure 4a, les deux extrémités 11 et 12 du conducteur hydraulique 10 sont immergées dans le liquide 52 contenu dans le cache-pot 60 servant de réservoir 61. Sur la figure 4b, l'extrémité 12 du conducteur hydraulique n'est pas immergé dans le liquide grâce à son maintien dans la fente 26 de la partie du tube 20 située sous le support 30 comme décrit précédemment.

Le support 30, est disposé dans le cache-pot 60 mais ne touche pas le fond du pot 62 de sorte à laisser un espace suffisant pour contenir le liquide 52.

Dans les configurations illustrées en figures 4a et 4b, le dispositif d'approvisionnement 1, le support 30 et le réservoir 61 ne sont pas visibles depuis l'extérieur, si ce n'est lorsque le cache-pot 60 est transparent.

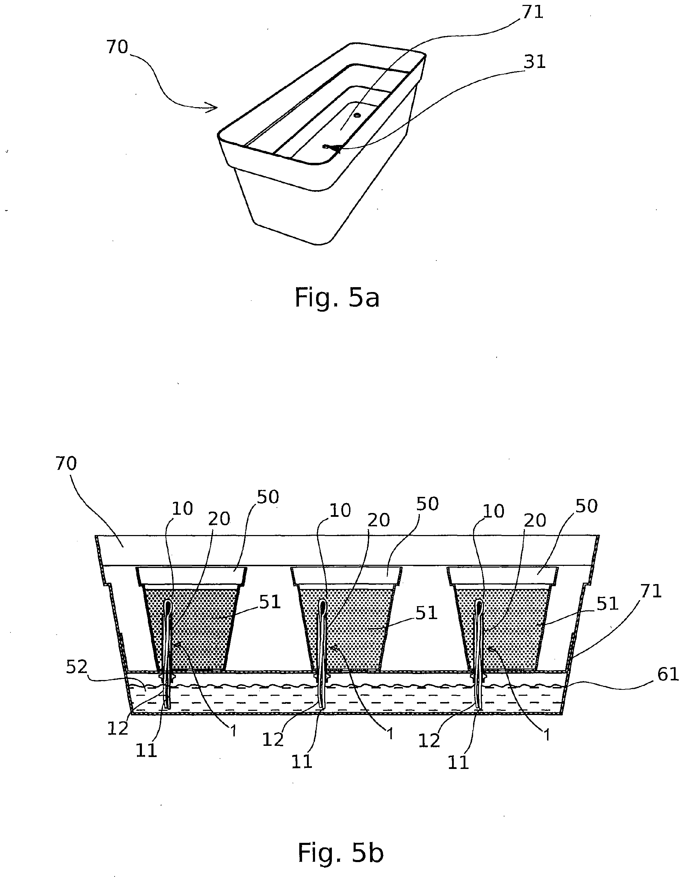

Les figures 5a et 5b représentent une jardinière 70 configurée pour accueillir un ou plusieurs dispositifs d'approvisionnement 1 selon la présente invention.

La figure 5a représente la jardinière 70 vide et un fond 71 qui sert de support comme on va le voir après, comprenant un ou plusieurs trous de 31 configurés pour le passage du tube du dispositif d'approvisionnement 1 de sorte qu'il traverse de part en part le fond 71 qui est de préférence amovible. La partie de jardinière située en dessous du fond 71 amovible sert de réservoir 61 à liquide 52.

La figure 5b représente une vue en coupe de la jardinière 70 comprenant des pots 50 et dont le réservoir 61 comprend du liquide 52. Le fond 71 de la jardinière sert de support aux pots 50. De préférence, le support 71 comprend sur sa face supérieure des moyens pour laisser l'air circuler sous les pots 50 et se renouveler. Ces moyens peuvent être des rainures telles que les passages de circulation d'air 33 définis précédemment ou bien des plots, comme les plots 68 et 88 décrits plus loin. Les trous 31 pour le passage du dispositif d'approvisionnement 1 sont dimensionnés également pour représenter des arrivées d'air sous le support 71 afin de permettre une circulation d'air au niveau du ou des dispositifs d'approvisionnement 1.

Selon cet exemple non limitatif, chaque pot 50 comprend au moins un dispositif d'approvisionnement 1 disposé de façon à ce que les extrémités 11 et 12 soient en contact avec le liquide, de sorte à puiser par capillarité le liquide 52 depuis le réservoir 61 jusqu'au substrat 51 de chaque pot 50. Cette jardinière permet ainsi de laisser les plantes dans leur pot d'origine.

Le principe de la jardinière 70 selon la présente invention est similaire au principe de base exposé précédemment pour le cache-pot 60 et illustré sur les figures 4a et 4b, principe dans lequel le nombre de dispositifs d'approvisionnement 1 a simplement été augmenté et la jardinière jouant le rôle de cache-pots.

Dans le cas d'une jardinière 70 généralement disposée en extérieur, sur une terrasse ou un balcon, la présente invention apporte l'avantage de réduire le nombre d'insectes aquatiques de type moustique par exemple compte tenu que le réservoir 61 de liquide 52, d'eau par exemple, est dissimulé et qu'il n'y a pas de liquide stagnant au niveau du substrat 51 des plantes 2.

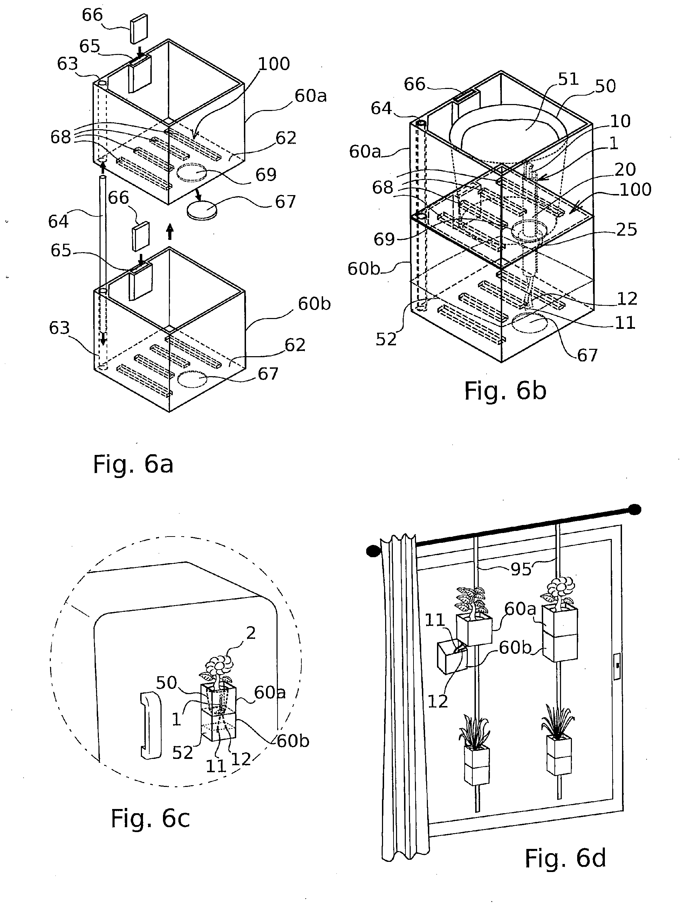

Les figures 6a, 6b, 6c et 6d représentent une alternative de cache-pot configuré pour accueillir un dispositif d'approvisionnement 1 selon la présente invention.

Selon la figure 6a, l'ensemble comprend deux cache-pot 60a et 60b identiques au départ, de préférence de la forme d'un parallélépipède rectangle et avantageusement de forme cubique. Chaque cache-pot 60a et 60b présente une ouverture correspondant à une de ses faces et un fond 62 sur lequel sont disposés au moins deux plots 68 et une partie sécable 67. Chaque cache-pot présente un trou de charnière 63 situé à l'angle de deux de ses faces et une encoche 65 destinée à recevoir un aimant 66. Le trou de charnière 63 est de préférence cylindrique et adapté pour recevoir un axe de charnière 64. Le diamètre du trou de charnière 63 étant adapté au diamètre de l'axe de la charnière 64. De préférence le diamètre du trou de charnière 63 est égal au diamètre de l'axe de la charnière 64 de façon à ce que l'axe 64 soit rentré en force dans le trou de charnière 64. De préférence, l'axe de charnière 64 a une longueur inférieure ou égale à deux fois la longueur du trou de charnière 63. L'axe de charnière 64 est mis en place correctement dans les trous de charnière 63 lorsque les deux cache-pot 60a et 60b sont l'un au dessus de l'autre et l'un contre l'autre comme représentés sur la figure 6b et que l'axe de charnière 64 ne dépasse pas des trous de charnière 63. Les cache-pot 60a et 60b sont maintenus ensemble dans cette position et ne glissent pas sur l'axe 64 grâce aux dimensions de l'axe 64 et des trous de charnière qui empêchent tout glissement du cache-pot par rapport à l'axe 64. La partie sécable 67 du cache-pot situé au dessus, il s'agit du cache pot 60a sur les figures 6a à 6b, est retirée de façon à laisser apparaître une cavité 69 sur le fond du cache-pot 60a. La partie sécable 67 du cache-pot situé en dessous, le cache pot 60b sur les figure 6a à 6d, n'est pas retirée de façon à ce que le cache-pot 60b présente un volume étanche définissant un réservoir apte à recevoir un liquide 52.

Le cache pot 60b inférieur donc situé en dessous du cache pot 60a devient le réservoir de liquide 52 tandis que le cache pot 60a supérieur, donc situé au dessus du cache-pot 60b sert de support apte à recevoir un pot 50 contenant un substrat 51 et une plante 2. La charnière 64 est un moyen pour maintenir ensemble les deux-cache pots et également sert de moyen de rotation de l'un par rapport à l'autre. Ainsi le cache pot 60b inférieur peut tourner autour de l'axe 64 en laissant apparaître son ouverture de façon à pouvoir être rempli de liquide 52. En effet, lorsque le cache-pot 60b inférieur est placé par rapport au cache pot supérieur 60a de façon à ce que leurs quatre arêtes sont alignées le liquide 51 ne se voit pas de l'extérieur. Le cache-pot 60a présente sur son fond une surface d'appui 100 matérialisée par les plots 68 et s'étendant dans un plan de préférence horizontal. Cette surface d'appui 100 est destinée à laisser passer le tube 20 du dispositif d'approvisionnement 1 mais également à supporter le pot 50.

Selon la figure 6b, une partie du tube 20 du dispositif d'approvisionnement 1 passe à travers le trou délimitée par la cavité 69 et traverse le fond du pot 50 disposé dans le cache-pot supérieur 60a de sorte à pénétrer dans le substrat 51. Grâce aux plots 68 de l'air circule sous le fond du pot 50 et évite la formation d'eau condensée sur le fond du pot 50. De plus, la surélévation du pot 50 par les plots 68 permet également à l'air de circuler entre l'extérieur et l'intérieur du cache pot inférieur 60b en passant par la cavité 69. Le diamètre de la cavité 69 étant supérieur au diamètre de la butée 25 du dispositif d'approvisionnement, la cavité 69 n'est jamais complètement obstruée. Ainsi la cavité 69 est dimensionnée pour être un trou pour le passage du tube 20 du dispositif d'approvisionnement 1 et également pour être une arrivée d'air sous le support 60a afin de permettre une circulation et un renouvellement de l'air au niveau du dispositif d'approvisionnement 1.

Cette configuration permet de laisser une circulation d'air au niveau de la base du dispositif d'approvisionnement 1 afin d'éviter la moisissure et le pourrissement du conducteur hydraulique 10 ou des racines de la plante 2, ou encore du substrat 51.

Sur la figure 6b, on peut voir que le conducteur hydraulique 10 du dispositif d'approvisionnement 1 traverse le plan de la surface d'appui 100 et qu'au moins une de ses extrémités 11 et 12 est en contact avec le liquide 52.

Sur les figures 6c et 6d, les cache-pots 60b situés en dessous des cache-pots 60a jouent le rôle de réservoir 61 de liquide 52.

Sur les figures 6c et 6d, l'ensemble formé des deux cache-pot 60a et 60b, du pot 50 contenant du substrat 51, d'une plante 2 et du dispositif d'approvisionnement 1 est fixé sur une surface métallique grâce aux aimants 66. Selon l'exemple de la figure 6c, l'ensemble est disposé sur un réfrigérateur et on peut voir par transparence les extrémités 11 et 12 du conducteur hydraulique être en contact avec la source de liquide 52 contenu dans le cache-pot 60b qui joue le rôle de réservoir.

Selon un mode de réalisation représenté sur la figure 6d, les cache-pots 60a et 60b munis de leurs aimants 66 présentés en figures 6b peuvent être disposés au niveau d'une surface vitrée sur une tige métallique 95 pendu par son extrémité en forme de crochet à la barre d'un rideau par exemple. De façon alternative et non représentée, l'ensemble peut également être disposé par aimantation sur un ou plusieurs éléments métalliques fixés, par exemple via un élément adhésif, à la surface vitrée. Cette application de la présente invention permet d'amener au plus près les plantes des sources de lumière naturelle tout en conservant une alimentation en eau régulée et suffisante des plantes via la présente invention. En effet, le positionnement de plantes au niveau d'une surface vitrée implique une forte exposition à la lumière du jour et donc une consommation accrue d'eau par la plante, toutefois cette consommation ne doit pas être surestimée. Trouver l'équilibre de la quantité d'eau nécessaire pour la plante est alors une réelle problématique. Cette problématique non résolue par l'art antérieur trouve pour solution la présente invention qui permet un apport équilibré en eau à la plante, de préférence continu, selon ses besoins quand bien même ceux-ci sont importants et/ou variables. De plus, le remplissage du réservoir 61 est facilité puisqu'il suffit de faire tourner le cache pot 60b qui sert de réservoir 61 autour de son axe 64 par rapport au cache pot 60a pour accéder au réservoir sans qu'il soit nécessaire de déplacer le pot 50 ou l'ensemble.

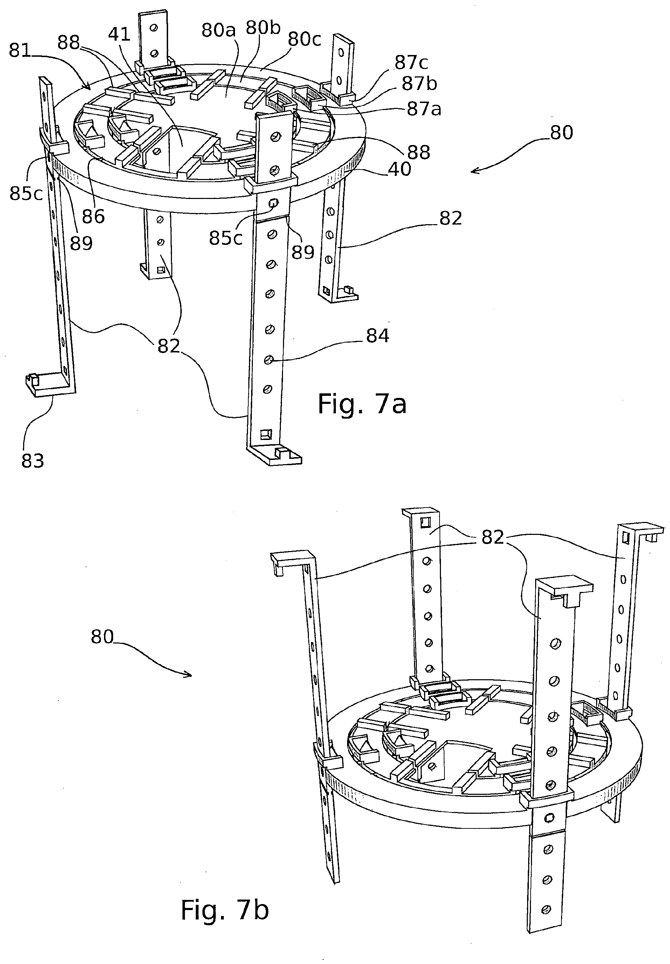

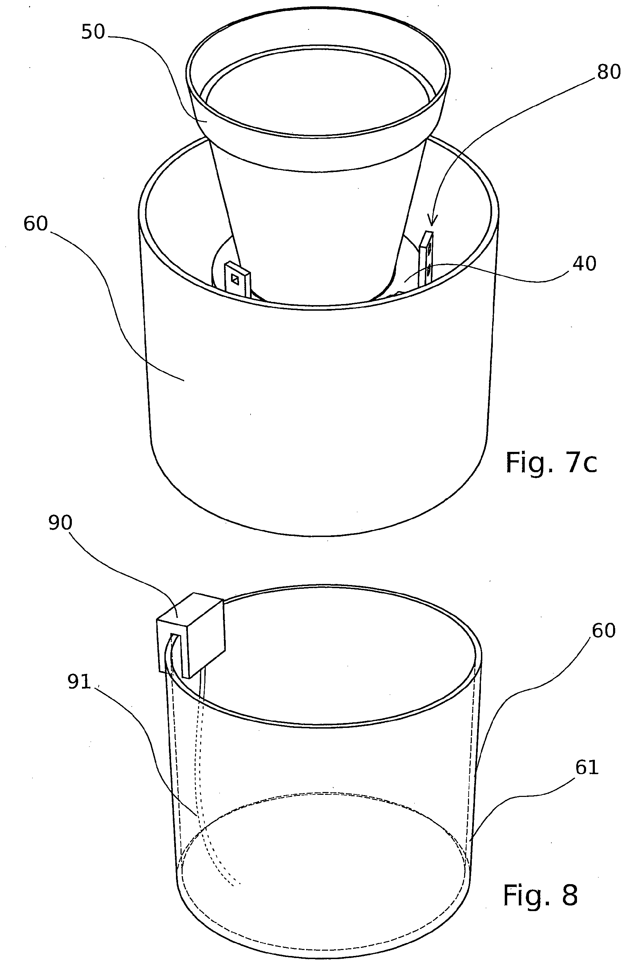

Les figures 7a, 7b et 7c représentent une plateforme de soutien 80 modulable configurée pour servir de support à un pot 50 dans un cache-pot 60 de dimension quelconque et pour maintenir un dispositif d'approvisionnement 1 selon la présente invention en position de fonctionnement.

De manière avantageuse, la plateforme de soutien 80 comprend une base de soutien 40 et au moins trois de préférence quatre pattes de soutien 82. Cette base de soutien 40 sert de support au pot 50 et comprend au moins un trou 41 pour le passage du tube 20 du dispositif d'approvisionnement 1. La base de soutien 40 présente trois parties, une partie centrale 80a, une partie intermédiaire détachable 80b située autour de la partie centrale 80a et une partie extérieure détachable 80c située autour de la partie intermédiaire 80b. Sur les figures, la partie 80a est circulaire tandis que les parties 80b et 80c sont des couronnes. La partie centrale pourrait être d'une autre forme tel qu'un carré sans sortir du cadre de l'invention. Les trois parties sont maintenues ensemble par des pièces sécables 86 de façon à ce que la partie 80c puissent se détacher facilement de la partie intermédiaire 80b en exerçant une pression de la main. De même, la partie intermédiaire 80b se détache facilement de la partie 80a en brisant les pièces sécables 86 qui maintiennent les deux parties ensemble. Grâce aux parties détachables 80b et 80c, la base de soutien 40 peut être adaptée à la dimension du cache-pot dans lequel on veut l'insérer. Ainsi, dans le cas d'un cache pot circulaire, lorsque le diamètre du cache-pot est inférieur au diamètre de la base de soutien 40 complète, on peut détacher une partie 80c, ou deux parties 80b et 80c de la partie centrale de façon à réduire le diamètre de la plateforme de soutien pour pouvoir l'insérer dans le cache-pot 60.

Chaque partie de la base de soutien 40 comprend sur son pourtour au moins 3 encoches 87, de préférence de manière équidistante les unes des autres par exemple à 120 degrés les unes des autres dans le cas de trois encoches, et par exemple à 90 degrés les unes des autres dans le cas de quatre encoches 87 comme représentées sur les figures 7a et 7b. La partie centrale 80a présente 4 encoches 87a, la partie intermédiaire 80b présente 4 encoches 87b et la partie extérieure présente 4 encoches 87c. Chaque partie de la base de soutien 40 comprend des ergots 85 situés dans les encoches 87. Les encoches 87a comprennent chacune un ergot 85a, les encoches 87b comprennent chacune un ergot 85b et les encoches 87C comprennent chacune un ergot 85c. Sur les figures 7a et 7b, ne sont visibles que 2 ergots 85c situées sur la partie extérieure 80c de la base de soutien, un ergot 85b sur la partie intermédiaire 80b et un ergot 85a sur la partie centrale 80a.

Ces ergots 85 sont configurés pour coopérer avec des trous de fixation 84 situés sur les pattes de soutien 82 de façon à maintenir la base de soutien 40 sur les pattes de soutien, surélevée par rapport au fond 62 d'un cache pot 60 par exemple.

Ces pattes de soutien 82 comprennent avantageusement des pieds de soutien 83 afin d'assurer une stabilité à la plateforme de soutien 80.

De manière très astucieuse, les pattes de soutien 82 comprennent une pluralité de trous de fixation 84 disposés le long des pattes de soutien 82 de sorte à pouvoir régler la hauteur souhaitée de maintien de la base de soutien 40 relativement au fond 62 du cache-pot 60 par exemple. De plus, chaque patte de soutien 82 comporte une partie sécable le long d'une rainure 89 de façon à pouvoir casser la patte 82 au niveau de la rainure et ainsi de raccourcir la patte de soutien. Les 3 ou 4 pattes de soutien 82 ainsi raccourcies peuvent être adaptées à la hauteur du cache pot 60. De manière avantageuse, la plateforme de soutien 80 peut comprendre des matériaux transparents afin d'être positionnée dans des cache-pot 60 transparents, en verre par exemple.

La figure 7a illustre une configuration de la plateforme de soutien 80 dans laquelle la base de soutien 40 repose sur les pattes de soutien 82, elles-mêmes reposant dans le fond 62 d'un cache-pot 60 par exemple, comme illustré en figure 7c.

La figure 7b illustre une configuration de la plateforme de soutien 80 dans laquelle la base de soutien 40 est suspendue aux pattes de soutien 82, elles-mêmes solidaires du bord de cache-pot 60 par l'intermédiaire des pieds de soutien 83. Cette configuration est avantageuse lorsque le cache-pot 60 est trop profond relativement à la plateforme de soutien 80 et au pot 50 de la plante 2.

Dans toutes ces configurations, le fond du cache-pot 60 sert de réservoir 61 de liquide 52 dans lequel au moins une des extrémités du conducteur hydraulique 10 du dispositif d'approvisionnement 1 est en contact.

La base de soutien 40 comprend sur sa face supérieure, au moins sur sa partie centrale 80a, une pluralité de plots 88 destinés à former une surface d'appui 81 et à surélever le pot 50 par rapport à la face supérieure de la base de soutien de façon à ce que l'air circule et se renouvelle sous le pot et de façon à éviter que de la condensation ne se forme sous le pot 50. De plus cela évite le pourrissement du conducteur hydraulique et favorise la circulation de l'air dans le substrat. La surface d'appui 81 définit un plan, de préférence horizontal. Le trou 41 est dimensionné pour le passage du tube 20 du dispositif d'approvisionnement 1 et pour représenter une arrivée d'air sous la base de soutien 40 de sorte à ce que le conducteur hydraulique 10 traverse le plan et que de l'air circule et se renouvelle au niveau du dispositif d'approvisionnement.

La figure 8 représente un détecteur de niveau 90 du liquide 52 dans le réservoir 61 configuré pour fonctionner en synergie avec la présente invention.

En effet, le détecteur de niveau 90 de liquide 52 est calibré par l'utilisateur en fonction de divers paramètres dont au moins le type de plante, voire de son exposition à la lumière, donc de la luminosité, de la taille du pot, du type de substrat, etc.

Selon un mode de réalisation, le détecteur de niveau 90 comprend une sonde de mesure 91 du niveau de liquide 52 s'étendant depuis le détecteur de niveau 90 jusqu'au fond 62 du cache-pot 60.

Avantageusement, le détecteur de niveau 90 est configuré pour déclencher une notification dès lors que le niveau détecté de liquide 52 dans le réservoir 61 est inférieur à un seuil prédéterminé lors de la calibration du détecteur de niveau 90.

De manière astucieuse, le type de dispositif d'approvisionnement 1 est préalablement enregistré dans une mémoire du détecteur de niveau 90 de sorte à établir une correspondance entre le type de plante 2 et le type de dispositif d'approvisionnement 1, et donc à déterminer les paramètres de fonctionnement du détecteur de niveau 90.

Une fois les informations renseignées par l'utilisateur au moyen d'une interface filaire ou non filaire de type Smartphone par exemple, le détecteur de niveau 90 notifiera l'utilisateur au moment propice pour que celui-ci remplisse le réservoir 61 de liquide 52.

En effet, en fonction des plantes, de leur exposition à la lumière et de la taille du pot par exemple, le détecteur de niveau 90 est temporisé pour permettre à la plante 2 de ne plus recevoir de liquide 52 durant 24 à 48 heures afin de ne pas surcharger l'apport en liquide 52. Cette temporisation est liée au processus de ressuyage bien connu de l'Homme du métier et la durée de la temporisation est directement fonction des paramètres physiques du pot 50, comme ses dimensions par exemple.

De manière avantageuse, le détecteur de niveau 90 peut comprendre un indicateur lumineux invitant l'utilisateur à remplir le réservoir 61 de liquide 52.

Selon un autre mode de réalisation, le détecteur de niveau 90 peut envoyer une notification à l'utilisateur via un réseau de communication radio et par exemple directement vers un dispositif de communication de type Smartphone par exemple.

De manière astucieuse, dans le cas où le détecteur de niveau 90 comprend un voyant lumineux, celui-ci est disposé relativement bas par rapport au cache-pot 60 de sorte à demeurer visible et cela indépendamment de la plante 2 et de son feuillage par exemple. Donc de façon avantageuse, le détecteur est temporisé de façon à déclencher un moyen de signalement lumineux, à distance tel que l'envoi d'une notification ou tout autre moyen, un certain temps après que le réservoir soit vide, temps calculé en fonction du type de dispositif d'approvisionnement, du volume du pot et du type de plante. De manière préférée, le détecteur de niveau 90 est disposé sur le bord du cache-pot 60.

Au travers de ces différents modes de réalisation, tous combinables entre eux, et au travers de ces divers exemples d'application, les avantages de la présente invention ont été exposés.

Cette invention présente une forte synergie entre le type de substrat 51, donc de plante 2, et la configuration du dispositif d'approvisionnement 1. La présente invention amplifie cette synergie au travers de divers éléments afin d'une part d'assurer le maintien du dispositif d'approvisionnement 1 relativement au pot 50 mais également de permettre une circulation d'air, et un remplissage aisé du réservoir 61 de liquide 52, remplissage qui est optimisé par le détecteur de niveau 90 dont les paramètres sont adaptés à la plante 2 considérée.

L'ensemble des éléments de la présente invention fonctionne donc en synergie pour permettre une bonne alimentation en liquide 52 et en air aux plantes au travers d'un dispositif d'approvisionnement 1.

Ce dispositif d'approvisionnement 1 fonctionne parfaitement bien indépendamment des divers éléments et autre raffinement, toutefois ces éléments supplémentaires accentuent l'efficacité du dispositif d'approvisionnement 1 selon la présente invention.

De façon avantageuse dans les différents modes de réalisation du dispositif selon l'invention, le dispositif d'approvisionnement comprend au moins un support destiné à être positionné entre un pot et une source de liquide et configuré pour laisser passer le tube, voire le supporter et pour être traversé par le conducteur hydraulique de sorte à ce qu'au moins une extrémité du conducteur hydraulique parmi la première extrémité et la deuxième extrémité soit en contact avec au moins une partie de la source de liquide.

Pour des questions d'esthétisme, le support 30, la base de soutien 40 ou encore la plateforme de soutien 80 peuvent comprendre des matériaux transparents relativement à la lumière du jour.

Avantageusement, le conducteur hydraulique, le substrat et la plante sont choisis pour que le conducteur hydraulique présente une surface d'échange avec le substrat apte à apporter à la plante un approvisionnement continu en liquide relativement à ladite source de liquide.

Cela permet d'adapter la présente invention à divers types de plantes, de substrats et de dimension de pots. Ces paramètres influent directement sur le choix du conducteur hydraulique, sur son diamètre, sur sa surface d'échange et sur les matériaux qui le composent.

A titre d'exemple non limitatif, les matériaux, les valeurs numériques et les dimensions suivantes pourront être adaptées aux différents éléments de la présente invention :

- Le conducteur hydraulique présente un diamètre compris entre 1mm et 8mm, de préférence entre 2mm et 6mm et avantageusement entre 3mm et 4mm.
- Le tube présente un diamètre intérieur compris entre 4.5mm et 20mm, de préférence entre 5.5mm et 15mm et avantageusement entre 7.5mm et 13.5mm.
- La boucle présente une dimension d'extension principale en dehors du tube de longueur l dans le substrat comprise entre 5mm et 100mm, de préférence entre 12mm et 50mm et avantageusement entre 24mm et 40mm.
  Cela permet d'adapter la surface d'échange en fonction de la plante, du pot et du substrat assurant ainsi l'universalité de la présente invention relativement aux diverses plantes et à leurs besoins.
- Le conducteur hydraulique est configuré pour présenter une surface d'échange avec le substrat comprise entre 4mm$^2$ et 710mm$^2$, de préférence entre 10mm$^2$ et 215mm$^2$ et avantageusement entre 30mm$^2$ et 100mm$^2$.
  Cela permet d'apporter uniquement la quantité de liquide nécessaire à la plante via une surface d'échange contrôlée et optimisée.
- Le tube présente une dimension d'extension principale de longueur L dans le substrat comprise entre 25mm et 100mm, de préférence entre 40mm et 85mm et avantageusement entre 50mm et 70mm.
- Le rapport entre la longueur du tube et la longueur de la boucle est compris entre 1.8 et 4.2, de préférence entre 3.4 et 4 et avantageusement entre 3.7 et 3.8.
- Le rapport entre le diamètre intérieur du tube et le diamètre du conducteur hydraulique est compris entre 1.8 et 3.5, de préférence entre 2.1 et 2.3 et avantageusement entre 2.2 et 2.3.
- L'ouverture sur la paroi latérale du tube sous forme de fente présente une longueur comprise entre 3mm et 100mm, de préférence entre 5mm et 80mm et avantageusement entre 8mm et 40mm.
- L'ouverture sur la paroi latérale du tube sous forme de fente présente une largeur comprise entre 1mm et 10mm, de préférence entre 3mm et 7mm et avantageusement entre 4mm et 6mm.
- Le substrat présente une épaisseur e selon un axe parallèle à la dimension d'extension principale du tube comprise entre 40mm et 220mm et de préférence entre 70mm et 180mm.
- Le rapport entre e et L est compris entre 1.8 et 2.8, de préférence entre 2.2 et 2.5 et avantageusement entre 2.3 et 2.4.
- Le rapport entre le diamètre intérieur du pot et le diamètre du conducteur hydraulique est compris entre 30 et 60, de préférence entre 35 et 45 et avantageusement entre 40 et 42.
- Le conducteur hydraulique comprend un matériau pris parmi au moins les matériaux suivants: polymère, coton, lin, polypropylène, polyamide.
- Le substrat peut comprendre au moins l'un des substrats suivants : terre, sable, tourbe blonde, tourbe brune, écorce, fibre de coco, fibre végétale

    - - Le support et la base de soutien comprennent un matériau pris parmi au moins les matériaux suivants : polymères, bois, matériau composite. La plateforme de soutien comprend un matériau pris parmi au moins les matériaux suivants : polymère, bois, matériau composite.

L'invention n'est pas limitée aux modes de réalisation décrits mais s'étend à tout mode de réalisation conforme aux revendications.

**Revendications**

1. Dispositif d'approvisionnement (1) configuré pour approvisionner en liquide (52) au moins une plante (2) contenue dans un pot (50) comprenant un substrat (51, 51a, 51b), le dispositif d'approvisionnement (1) comprenant au moins :

    ◦ Un conducteur hydraulique (10) configuré pour acheminer le liquide par capillarité et comprenant au moins une première extrémité (11) et au moins une deuxième extrémité (12) ;
    ◦ Un tube (20) comprenant au moins une première sortie (21) et au moins une deuxième sortie (22), la deuxième sortie (22) étant destinée à être en contact avec le substrat (51, 51a, 51b), le tube (20) logeant une partie au moins du conducteur hydraulique (10);

Le dispositif d'approvisionnement (1) étant **caractérisé en ce que** :

■ Le conducteur hydraulique (10) forme une boucle (13) comprenant un coude (13a) et au moins une première (13b) et une deuxième (13c) portions du conducteur hydraulique (10) s'étendant respectivement de part et d'autre du coude (13a), de préférence ladite au moins une boucle (13) étant destinée à être placée au moins en partie en contact avec le substrat (51, 51a, 51b);

■ La boucle (13) est disposée à l'extérieur du tube (20) et au moins une portion (13b, 13c) sort par la deuxième sortie (22) du tube (20) ;

■ La première extrémité (11) et la deuxième extrémité (12) du conducteur hydraulique (10) sortent par la première sortie (21) du tube (20) ;

■ Au moins une extrémité du conducteur hydraulique (10) parmi la première extrémité (11) et la deuxième extrémité (12) est destinée à être en contact avec une source de liquide (52) ;

■ Le tube (20) comprend au moins une ouverture (24, 26) configurée pour permettre une circulation d'air entre l'intérieur et l'extérieur du tube (20), ladite au moins une ouverture (24, 26) est portée par une paroi latérale du tube (20) et est disposée entre la première sortie (21) et la deuxième sortie (22) du tube (20), ladite au moins une ouverture (24) s'étend sous la forme d'une fente longitudinale depuis la deuxième sortie (22) du tube (20) et en direction de la première sortie (21), le diamètre du tube étant dimensionné de façon à ce que, lorsque le conducteur hydraulique est logé dans le tube et gorgé de liquide, il existe un passage dans le tube non occupé par le conducteur et apte à laisser circuler de l'air entre les première (21) et deuxième (22) sorties du tube (20).

2. Dispositif d'approvisionnement (1) selon la revendication précédente dans lequel le tube (20) comprend au moins un organe de maintien (23, 23') configuré pour servir de butée audit coude (13a) de sorte à limiter le déplacement du coude (13a) en direction de l'intérieur du tube (20), l'organe de maintien (23, 23') présentant une surface de butée (28, 28') située au niveau de la deuxième sortie (22) du tube (20).

3. Dispositif d'approvisionnement (1) selon l'une quelconque des revendications précédentes dans lequel le diamètre intérieur du tube (20) est au moins égal à deux fois le diamètre du conducteur hydraulique (10).

4. Dispositif d'approvisionnement (1) selon l'une quelconque des revendications précédentes, dans lequel lesdits organes de maintien (23 et 23') et lesdites surfaces de butée (28 et 28') sont situés de façon à maintenir la partie du conducteur hydraulique (10) située à l'intérieur du tube le plus près possible, voire contre la partie de la surface interne dudit tube (20) diamétralement opposé à l'ouverture (24) de façon à éviter que la surface de la partie de conducteur hydraulique (10) située à l'intérieur du tube (20) soit en contact avec le substrat (51, 51a, 51b).

5. Dispositif d'approvisionnement (1) selon l'une quelconque des revendications précédentes comprenant au moins un support (30, 71, 60a, 40) pour un pot (50) comprenant au moins une surface d'appui (30a, 100, 81) définissant un plan, de préférence horizontal, ladite surface d'appui (30a, 100, 81) comprenant des moyens (33, 68, 88) pour laisser l'air circuler sous le pot et se renouveler, et au moins un trou (34, 31, 69, 41) dimensionné pour le passage du tube (20) du dispositif d'approvisionnement (1) et pour représenter une arrivée d'air sous le support (30, 71, 60a, 40) de sorte à ce que le conducteur hydraulique (10) traverse ledit plan et que de l'air circule et se renouvelle au niveau du dispositif d'approvisionnement (1).

6. Dispositif d'approvisionnement (1) selon la revendication 5, dans lequel ledit support (40) comprend trois parties (80a, 80b, 80c) et des moyens (86) pour réduire sa surface aux parties (80a et 80b) ou à la partie (80a) de façon à moduler la superficie de la surface d'appui (81), chacune des parties (80a, 80b, 80c) comprenant des moyens (85a, 85b, 85c) et (87a, 87b, 87c) pour coopérer avec au moins trois, de préférence quatre pattes de soutien (82), les pattes de soutien (82) comprenant chacune une partie sécable le long d'une rainure (89) sont munies d'une pluralités de trous (84) destinées à coopérer avec les moyens (85a, 85b, 85c) du support (40) de sorte à pouvoir régler la hauteur du support (40) relativement au fond (62) du cache-pot (60), les quatre pattes de soutien étant munies de pieds (83) aptes à s'accrocher au bord du cache-pot (60) pour permettre de suspendre le support (40) aux pattes de soutien (82), l'ensemble composé des quatre pattes de soutien (82) et du support (40) définissant une plateforme de soutien (80) modulable.

7. Dispositif d'approvisionnement (1) selon l'une quelconque des revendications précédentes destiné à coopérer avec un pot (50) présentant un premier diamètre D et dans lequel le conducteur hydraulique (10) présente un deuxième diamètre d, et dans lequel le rapport entre le premier diamètre D et le deuxième diamètre d est compris entre 30 et 60, de préférence entre 35 et 45 et avantageusement entre 40 et 42.

8. Dispositif d'approvisionnement (1) selon l'une quelconque des revendications précédentes dans lequel le rapport entre le diamètre intérieur du tube (20) et le diamètre du conducteur hydraulique (10) est compris entre 1.8 et 3.5, de préférence entre 2.1 et 2.3 et avantageusement entre 2.2 et 2.3.

9. Dispositif d'approvisionnement (1) selon l'une quelconque des revendications précédentes dans lequel la boucle (13) présente une dimension d'extension principale en dehors du tube (20) de longueur I comprise entre 5mm et 100mm, de préférence entre 12mm et 50mm et avantageusement entre 24mm et 40mm, de préférence cette longueur I de la boucle (13) est destinée à être en contact avec le substrat (51, 51a, 51b).

10. Dispositif d'approvisionnement (1) selon l'une quelconque des revendications précédentes dans lequel le tube (20) comprend une butée (25) disposée à une distance L de la deuxième sortie (22) du tube (20) destinée à servir de butée limitant l'insertion du tube (20) à l'intérieur du substrat (51, 51a, 51b).

11. Dispositif d'approvisionnement (1) selon l'une quelconque des revendications précédentes dans lequel le conducteur hydraulique (10) comprend un matériau pris parmi au moins les matériaux suivants : polymère, coton, lin, polypropylène, polyamide.

12. Dispositif d'approvisionnement (1) selon l'une quelconque des revendications précédentes dans lequel le liquide (52) est situé dans un réservoir (61, 60b), le dispositif d'approvisionnement (1) comprenant au moins un détecteur de niveau (90) et une sonde de mesure (91) du niveau de liquide (52) s'étendant depuis le détecteur de niveau (90) jusqu'au fond (62) du réservoir (61, 60b), ledit détecteur étant destiné à déclencher un moyen de signalement lorsque ledit niveau de liquide (52) dans le réservoir (61) de liquide (52) est en dessous d'un seuil prédéterminé, ou bien un certain temps après que le réservoir soit vide.

13. Ensemble comprenant un cache-pot (60, 60a, 70), un réservoir (61, 60b) de liquide (52), au moins un pot (50), une plante (2) et un substrat (51, 51a, 51b) contenus dans le pot (50) et au moins un dispositif d'approvisionnement (1) selon l'une quelconque des revendications précédentes.

14. Ensemble selon la revendication 13, dans lequel ledit cache-pot (60a) et ledit réservoir (60b) ont une forme identique parallélépipédique et de préférence cubique, et sont reliés grâce à un axe de charnière (64) rentré en force dans un trou de charnière (63) du cache-pot (60a) et dans un trou de charnière (63) du réservoir (60b), ledit axe de charnière (64) permettant la rotation du réservoir (60b) par rapport au cache-pot (60a) de façon à faciliter son remplissage de liquide (52), ledit cache-pot (60a) et ledit réservoir (60b) comprenant un aimant (65) de façon à pouvoir fixer l'ensemble sur une surface métallique, le fond (62) du cache-pot (60a) et le fond (62) du réservoir (60b) étant chacun muni d'une partie sécable (67) destinée en l'enlevant à former à un trou (69).

15. Ensemble selon la revendication 14, dans lequel la surface métallique est une tige (95) pendue à son extrémité de façon à positionner la plante (2) devant une surface vitrée.

**Patentansprüche**

1. Versorgungsvorrichtung (1), die konfiguriert ist, um mindestens eine Pflanze (2), die in einem Topf (50), umfassend ein Substrat (51, 51a, 51b), enthalten ist, mit Flüssigkeit (52) zu versorgen, die Versorgungsvorrichtung (1) mindestens umfassend:

     ○ einen hydraulischen Leiter (10), der konfiguriert ist, um die Flüssigkeit durch Kapillarwirkung zu befördern, und umfassend mindestens ein erstes Ende (11) und mindestens ein zweites Ende (12);
     ○ ein Rohr (20), umfassend mindestens einen ersten Ausgang (21) und mindestens einen zweiten Ausgang (22), wobei der zweite Ausgang (22) dafür bestimmt ist, mit dem Substrat (51, 51a, 51b) in Kontakt zu stehen, wobei das Rohr (20) mindestens einen Teil des hydraulischen Leiters (10) aufnimmt;

wobei die Versorgungsvorrichtung (1) **dadurch gekennzeichnet ist, dass:**

     □ der hydraulische Leiter (10) eine Schlaufe (13), umfassend ein Kniestück (13a) und mindestens einen ersten (13b) und einen zweiten (13c) Abschnitt des hydraulischen Leiters (10), die sich jeweils auf beiden Seiten des Kniestücks (13a) erstrecken, ausbildet, wobei vorzugsweise die mindestens eine Schlaufe (13) dafür bestimmt ist, mindestens teilweise in Kontakt mit dem Substrat (51, 51a, 51b) angeordnet zu werden;
     □ die Schlaufe (13) außerhalb des Rohrs (20) eingerichtet ist und mindestens ein Abschnitt (13b, 13c) durch den zweiten Ausgang (22) des Rohrs (20) austritt;
     □ das erste Ende (11) und das zweite Ende (12) des hydraulischen Leiters (10) durch den ersten Ausgang (21) des Rohrs (20) austreten;
     □ mindestens ein Ende des hydraulischen Leiters (10) von dem ersten Ende (11) und dem zweiten Ende (12) dafür bestimmt ist, mit einer Quelle der Flüssigkeit (52) in Kontakt zu stehen;
     □ das Rohr (20) mindestens eine Öffnung (24, 26) umfasst, die konfiguriert ist, um eine Luftzirkulation zwischen dem Inneren und dem Äußeren des Rohrs (20) zu ermöglichen, wobei die mindestens eine Öffnung (24, 26) durch eine Seitenwand des Rohrs (20) getragen wird und zwischen dem ersten Ausgang (21) und dem zweiten Ausgang (22) des Rohrs (20) eingerichtet ist, die mindestens eine Öffnung (24) sich in Form eines Längsschlitzes von dem zweiten Ausgang (22) des Rohrs (20) und in Richtung des ersten Ausgangs (21) erstreckt, wobei der Durchmesser des Rohrs bemessen ist, so dass, wenn der hydraulische Leiter in dem Rohr untergebracht und mit Flüssigkeit durchtränkt ist, ein Durchgang in dem Rohr vorhanden ist, der nicht durch den Leiter eingenommen ist und geeignet ist, Luft zwischen dem ersten (21) und dem zweiten (22) Ausgang des Rohrs (20) zirkulieren zu lassen.

2. Versorgungsvorrichtung (1) nach dem vorstehenden Anspruch, wobei das Rohr (20) mindestens ein Halteelement (23, 23') umfasst, das konfiguriert ist, um als Anschlag für das Kniestück (13a) zu dienen, um die Bewegung des Kniestücks (13a) in Richtung des Inneren des Rohrs (20) zu beschränken, wobei das Halteelement (23, 23') eine Anschlagsoberfläche (28, 28') aufweist, die an dem zweiten Ausgang (22) des Rohrs (20) gelegen ist.

3. Versorgungsvorrichtung (1) nach einem der vorstehenden Ansprüche, wobei der Innendurchmesser des Rohrs (20) mindestens gleich dem Doppelten des Durchmessers des hydraulischen Leiters (10) ist.

4. Versorgungsvorrichtung (1) nach einem der vorstehenden Ansprüche, wobei die Halteelemente (23 und 23') und die Anschlagsoberflächen (28 und 28') gelegen sind, so dass sie den Teil des hydraulischen Leiters (10), der im Inneren des Rohrs gelegen ist, so nah wie möglich oder sogar gegen den Teil der Innenoberfläche des Rohrs (20), der der Öffnung (24) diametral gegenüberliegt, halten, um zu verhindern, dass die Oberfläche des Teils des hydraulischen Leiters (10), der im Inneren des Rohrs (20) gelegen ist, mit dem Substrat (51, 51a, 51b) in Kontakt kommt.

5. Versorgungsvorrichtung (1) nach einem der vorstehenden Ansprüche, umfassend mindestens einen Träger (30, 71, 60a, 40) für einen Topf (50), umfassend mindestens eine Auflageoberfläche (30a, 100, 81), die eine Ebene vorzugsweise horizontal, definiert, die Auflageoberfläche (30a, 100, 81) umfassend Mittel (33, 68, 88), um die Luft unter dem Topf zirkulieren und sich erneuern zu lassen, und mindestens ein Loch (34, 31, 69, 41), das für den Durchgang des Rohrs (20) der Versorgungsvorrichtung (1) und zum Bilden eines Lufteinlasses unter dem Träger (30, 71, 60a, 40) bemessen ist, so dass der hydraulische Leiter (10) durch die Ebene verläuft und dass die Luft zirkuliert und sich an der Versorgungsvorrichtung (1) erneuert.

6. Versorgungsvorrichtung (1) nach Anspruch 5, wobei der Träger (40) drei Teile (80a, 80b, 80c) und Mittel (86) zum Verringern seiner Oberfläche an den Teilen (80a und 80b) oder an dem Teil (80a) umfasst, um den Flächeninhalt der Anlageoberfläche (81) zu modulieren, jeder der Teile (80a, 80b, 80c) umfassend Mittel (85a, 85b, 85c) und (87a, 87b, 87c) zum Zusammenwirken mit mindestens drei, vorzugsweise vier, Haltebügeln (82), wobei die Haltebügel (82), umfassend jeweils einen teilbaren Teil entlang einer Nut (89), mit einer Vielzahl von Löchern (84) versehen sind, die dafür bestimmt sind, mit den Mitteln (85a, 85b, 85c) des Trägers (40) zusammenzuwirken, um die Höhe des Trägers (40) relativ zu dem Boden (62) des Übertopfs (60) verstellen zu können, wobei die vier Haltebügel mit Füßen (83) versehen sind, die geeignet sind, an dem Rand des Übertopfs (60) eingehakt zu werden, um ein Aufhängen des Trägers (40) an den Haltebügeln (82) zu ermöglichen, wobei die aus den vier Haltebügeln (82) und dem Träger (40) bestehende Anordnung eine modulierbare Halteplattform (80) definiert.

7. Versorgungsvorrichtung (1) nach einem der vorstehenden Ansprüche, die dafür bestimmt ist, mit einem Topf (50), der einen ersten Durchmesser D aufweist, zusammenzuwirken, und wobei der hydraulische Leiter (10) einen zweiten Durchmesser d aufweist und wobei das Verhältnis zwischen dem ersten Durchmesser D und dem zweiten Durchmesser d zwischen 30 und 60, vorzugsweise zwischen 35 und 45 und vorteilhafterweise zwischen 40 und 42, beträgt.

8. Versorgungsvorrichtung (1) nach einem der vorstehenden Ansprüche, wobei das Verhältnis zwischen dem Innendurchmesser des Rohrs (20) und dem Durchmesser des hydraulischen Leiters (10) zwischen 1,8 und 3,5, vorzugsweise zwischen 2,1 und 2,3 und vorteilhafterweise zwischen 2,2 und 2,3, beträgt.

9. Versorgungsvorrichtung (1) nach einem der vorstehenden Ansprüche, wobei die Schlaufe (13) eine Hauptausdehnungsdimension außerhalb des Rohrs (20) der Länge I zwischen 5 mm und 100 mm, vorzugsweise zwischen 12 mm und 50 mm und vorteilhafterweise zwischen 24 mm und 40 mm aufweist, wobei vorzugsweise diese Länge I der Schlaufe (13) dafür bestimmt ist, mit dem Substrat (51, 51a, 51b) in Kontakt zu stehen.

10. Versorgungsvorrichtung (1) nach einem der vorstehenden Ansprüche, wobei das Rohr (20) einen Anschlag (25), der in einem Abstand L von dem zweiten Ausgang (22) des Rohrs (20) eingerichtet ist, der dafür bestimmt ist, als Anschlag zum Begrenzen des Einführens des Rohrs (20) in das Innere des Substrats (51, 51a, 51b) zu dienen.

11. Versorgungsvorrichtung (1) nach einem der vorstehenden Ansprüche, wobei der hydraulische Leiter (10) ein Material umfasst, das aus mindestens den folgenden Materialien ausgewählt ist: einem Polymer, Baumwolle, Leinen, Polypropylen, Polyamid.

12. Versorgungsvorrichtung (1) nach einem der vorstehenden Ansprüche, wobei die Flüssigkeit (52) sich in einem Behälter (61, 60b) befindet, die Versorgungsvorrichtung (1) umfassend mindestens einen Füllstandsdetektor (90) und eine Messsonde (91) für den Stand der Flüssigkeit (52), die sich von dem Füllstandsdetektor (90) bis zu dem Boden (62) des Behälters (61, 60b) erstreckt, wobei der Detektor dafür bestimmt ist, wenn der Stand der Flüssigkeit (52) in dem Behälter (61) der Flüssigkeit (52) unter einem vorgegebenen Schwellenwert liegt oder bei einer bestimmten Zeit, nachdem der Tank leer ist, ein Signalisiermittel auszulösen.

13. Anordnung, umfassend einen Übertopf (60, 60a, 70), einen Behälter (61, 60b) der Flüssigkeit (52), mindestens einen Topf (50), eine Pflanze (2) und ein Substrat (51, 51a, 51b), die in dem Topf (50) enthalten sind, und mindestens eine Versorgungsvorrichtung (1) nach einem der vorstehenden Ansprüche.

14. Anordnung nach Anspruch 13, wobei der Übertopf (60a) und der Behälter (60b) eine identische quaderförmige und vorzugsweise kubische Form besitzen und mittels eines Gelenkbolzens (64) verbunden sind, der kraftvoll in ein Loch des Gelenks (63) des Übertopfs (60a) und in ein Loch des Gelenks (63) des Behälters (60b) eingeführt wird, wobei der Gelenkbolzen (64) die Drehung des Behälters (60b) relativ zu dem Übertopf (60a) ermöglicht, um dessen Füllung mit Flüssigkeit (52) zu erleichtern, der Übertopf (60a) und der Behälter (60b) umfassend einen Magneten (65), um die Anordnung auf einer Metalloberfläche befestigen zu können, wobei der Boden (62) des Übertopfs (60a) und der Boden (62) des Behälters (60b) jeweils mit einem teilbaren Teil (67) versehen sind, der dafür bestimmt ist, bei Entfernen ein Loch (69) auszubilden.

15. Anordnung nach Anspruch 14, wobei die Metalloberfläche ein Stab (95) ist, der an seinem Ende aufgehängt ist, um die Pflanze (2) vor einer Glasoberfläche zu positionieren.

## Claims

1. A liquid-supplying device (1) configured to supply liquid (52) to at least one plant (2) contained in a pot (50) comprising a substrate (51, 51a, 51b), the liquid-supplying device (1) comprising at least:

   ∘ A hydraulic conductor (10) configured to convey the liquid by capillary action and comprising at least one first end (11) and at least one second end (12);
   ∘ A tube (20) comprising at least one first outlet (21) and at least one second outlet (22), the second outlet (22) being intended to be in contact with the substrate (51, 51a, 51b), the tube (20) housing at least one part of the hydraulic conductor (10);

   The supply device (1) being **characterized in that**:

   ▪ the hydraulic conductor (10) forms a loop (13) comprising an elbow (13a) and at least a first (13b) and a second (13c) portion of the hydraulic conductor (10) extending respectively on either side of the elbow (13a), preferably said at least one loop (13) being intended to be placed at least partly in contact with the substrate (51, 51a, 51b);
   ▪ the loop (13) is arranged outside the tube (20) and at least one portion (13b, 13c) exits through the second outlet (22) of the tube (20);
   ▪ the first end (11) and the second end (12) of the hydraulic conductor (10) exit through the first outlet (21) of the tube (20);
   ▪ at least one end of the hydraulic conductor (10) among the first end (11) and the second end (12) is intended to be in contact with a source of liquid (52);
   ▪ the tube (20) comprises at least one opening (24, 26) configured to allow air circulation between the interior and exterior of the tube (20), said at least one opening (24, 26) is carried by a side wall of the tube (20) and is arranged between the first outlet (21) and the second outlet (22) of the tube (20), said at least one opening (24) extends in the form of a longitudinal slot from the second outlet (22) of the tube (20) and towards the first outlet (21), the diameter of the tube being dimensioned so that, when the hydraulic conductor is housed in the tube and is saturated with liquid, there is a passage in the tube not occupied by the conductor and capable of allowing air to circulate between the first (21) and second (22) outlets of the tube (20).

2. The supply device (1) according to the preceding claim, wherein the tube (20) comprises at least one holding member (23, 23') configured to act as a stop for said elbow (13a) so as to limit the movement of the elbow (13a) towards the interior of the tube (20), the holding member (23, 23') having an abutment surface (28, 28') located at the second outlet (22) of the tube (20).

3.  The supply device (1) according to any one of the preceding claims, wherein the internal diameter of the tube (20) is at least equal to twice the diameter of the hydraulic conductor (10).

4.  The supply device (1) according to any one of the preceding claims, wherein said holding members (23 and 23') and said abutment surfaces (28 and 28') are located so as to hold the portion of the hydraulic conductor (10) located inside the tube as close as possible to, or even against, the part of the internal surface of said tube (20) diametrically opposite the opening (24) so as to prevent the surface of the hydraulic conductor part (10) located inside the tube (20) from being in contact with the substrate (51, 51a, 51b).

5.  The supply device (1) according to any one of the preceding claims, comprising at least one support (30, 71, 60a, 40) for a pot (50) comprising at least one support surface (30a, 100, 81) defining a plane, preferably horizontal, said support surface (30a, 100, 81) comprising means (33, 68, 88) to allow air to circulate under the pot and renew itself, and at least one hole (34, 31, 69, 41) dimensioned for the passage of the tube (20) of the supply device (1) and to provide an air inlet under the support (30, 71, 60a, 40) so that the hydraulic conductor (10) passes through said plane and air circulates and is renewed at the supply device (1).

6.  The supply device (1) according to claim 5, wherein said support (40) comprises three parts (80a, 80b, 80c) and means (86) for reducing its surface area to the parts (80a and 80b) or to the part (80a) so as to modulate the surface area of the support surface (81), each of the parts (80a, 80b, 80c) comprising means (85a, 85b, 85c) and (87a, 87b, 87c) for cooperating with at least three, preferably four, support legs (82), the support legs (82) each comprising a frangible part along a groove (89) are provided with a plurality of holes (84) intended to cooperate with the means (85a, 85b, 85c) of the support (40) so that one can adjust the height of the support (40) relative to the bottom (62) of the planter (60), the four support legs being provided with feet (83) suitable for hooking onto the edge of the planter (60) to allow the support (40) to be suspended from the support legs (82), the assembly consisting of the four support legs (82) and the support (40) defining a modular support platform (80).

7.  The supply device (1) according to any one of the preceding claims, intended to cooperate with a pot (50) having a first diameter D and wherein the hydraulic conductor (10) has a second diameter d, and wherein the ratio between the first diameter D and the second diameter d is between 30 and 60, preferably between 35 and 45, and advantageously between 40 and 42.

8.  The supply device (1) according to any one of the preceding claims, wherein the ratio between the internal diameter of the tube (20) and the diameter of the hydraulic conductor (10) is between 1.8 and 3.5, preferably between 2.1 and 2.3, and advantageously between 2.2 and 2.3.

9.  The supply device (1) according to any one of the preceding claims, wherein the loop (13) has a main extension dimension outside the tube (20) of length I between 5mm and 100mm, preferably between 12mm and 50mm, and advantageously between 24mm and 40mm; preferably this length I of the loop (13) is intended to be in contact with the substrate (51, 51a, 51b).

10. The supply device (1) according to any one of the preceding claims, wherein the tube (20) comprises a stop (25) arranged at a distance L from the second outlet (22) of the tube (20) intended to act as a stop limiting the insertion of the tube (20) into the substrate (51, 51a, 51b).

11. The supply device (1) according to any one of the preceding claims, wherein the hydraulic conductor (10) comprises a material selected from at least the following materials: polymer, cotton, linen, polypropylene, polyamide.

12. The supply device (1) according to any one of the preceding claims, wherein the liquid (52) is located in a reservoir (61, 60b), the supply device (1) comprising at least one level detector (90) and a liquid level measuring probe (91) extending from the level detector (90) to the bottom (62) of the tank (61, 60b), said detector being intended to trigger a signaling means when said level of the liquid (52) in the tank (61) containing the liquid (52) is below a predetermined threshold, or when a certain time has elapsed after the tank is empty.

13. An assembly comprising a planter (60, 60a, 70), a reservoir (61, 60b) of liquid (52), at least one pot (50), a plant (2) and a substrate (51, 51a, 51b) contained in the pot (50) and at least one supply device (1) according to any one of the preceding claims.

14. An assembly according to claim 13, wherein said planter (60a) and said reservoir (60b) have an identical parallelepipedal, and preferably cubic, shape, and are connected by means of a hinge pin (64) forced into a hinge hole (63) of the planter (60a) and in a hinge hole (63) of the tank (60b), said hinge pin (64) allowing the tank (60b) to rotate relative to the planter (60a) so as to facilitate its filling with liquid (52), said planter (60a) and said reservoir (60b) comprising a magnet (65) so that one can fix the assembly on a metal surface, the bottom (62) of the planter (60a) and the bottom (62) of the tank (60b), each being provided with a frangible part (67) intended, when removed, to form a hole (69).

15. An assembly according to claim 14, wherein the metal surface is a rod (95) suspended at its end so that one can position the plant (2) in front of a glass surface.

Fig. 1a

Fig. 1b

Fig. 1c

Fig. 1d

Fig. 2

Fig. 3

Fig. 4a

Fig. 4b

Fig. 5a

Fig. 5b

Fig. 6a

Fig. 6b

Fig. 6c

Fig. 6d

Fig. 7a

Fig. 7b

Fig. 7c

Fig. 8

**EP 3 585 147 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1232685 A
- CN 201640064
- US 4250665 A
- JP H10304783 B